# EUROPEAN PATENT APPLICATION

(11) **EP 4 604 274 A1**
(43) Date of publication of application: **20.08.2025**
(21) Application number: 23918107.6
(22) Date of filing: 28.01.2023
(51) Int. Cl.: H01M 10/658, H01M 10/613

(54) **BATTERY AND ELECTRICAL DEVICE**

(71) Applicant: Contemporary Amperex Technology (Hong Kong) Limited, Hong Kong (HK)
(72) Inventor: WANG, Wenli, Ningde, Fujian 352100 (CN); TANG, Yu, Ningde, Fujian 352100 (CN); HUANG, Xiaoteng, Ningde, Fujian 352100 (CN); YANG, Haiqi, Ningde, Fujian 352100 (CN); XU, Chenyi, Ningde, Fujian 352100 (CN)
(74) Representative: Ran, Handong
(86) International application number: PCT/CN2023/073601
(87) International publication number: WO 2024/156100

(57) **Abstract**

The present application relates to the technical field of batteries, and provides a battery and an electrical device. The battery comprises a battery pack, a first heat management component and a heat insulation member. The battery pack comprises a plurality of battery cells. In a first direction, the first heat management component is arranged on one side of the battery pack, and the first heat management component is configured to manage the temperature of the battery pack. In the first direction, the heat insulation member is arranged on the side of the first heat management component facing away from the battery pack. The heat insulation member is arranged on the first heat management component, and is located on the side of the first heat management component facing away from the battery pack in the first direction, so as to reduce heat exchange between the first heat management component and other components or the outside, such that the energy loss of the first heat management component can be reduced, thereby ensuring the heat management capability of the first heat management component on the battery cells; thus, the temperature of the battery cells can be effectively adjusted to reduce the temperature rise phenomenon of the battery cells, thereby improving the use performance of the battery and prolonging the service life of the battery.

## Description

### Technical Field

The present application relates to the field of battery technology, in particular to a battery, and an electrical equipment.

### Background Art

In recent years, new energy vehicles have made significant progress. In the field of electric vehicles, power batteries play an irreplaceable and important role as the power source of electric vehicles. The battery consists of a box and multiple battery cells housed within the box. As a core component of new energy vehicles, batteries have high requirements in terms of use performance and service life. At present, in order to optimize the internal space for the existing batteries, it is usually necessary to stack multiple battery cells and connect busbars and other components between them when assembling them into a box, so as to achieve series or parallel connection between multiple battery cells. However, during use, the battery cells inside the battery generate a large amount of heat during continuous charging and discharging, which can cause a sharp rise in the internal temperature of the battery, seriously affecting its use performance and service life, and even leading to significant safety hazards during its use, which is not conducive to consumer safety.

### Summary

The embodiments of the present application provide a battery and an electrical equipment, which can effectively improve the use performance and service life of the battery.

In the first aspect, the embodiments of the present application provide a battery, comprising a battery pack, a first thermal management component, and a thermal insulating member, wherein the battery pack comprises multiple battery cells; along a first direction, the first thermal management component is arranged on one side of the battery pack, and the first thermal management component is configured to manage a temperature of the battery pack; and along the first direction, the thermal insulating member is arranged on one side of the first thermal management component facing away from the battery pack.

In the above technical solution, a first thermal management component is provided on one side of the battery pack in the first direction to manage the temperature of the battery cells of the battery pack through the first thermal management component. A thermal insulating member is provided on the first thermal management component, and the thermal insulating member is located on the side of the first thermal management component facing away from the battery pack in the first direction, so as to reduce the phenomenon of heat exchange between the first thermal management component and other components or the outside world, thereby reducing the energy loss of the first thermal management component and ensuring the thermal management ability of the first thermal management component on the battery cells. This can effectively regulate the temperature of the battery cells, reduce the temperature rise phenomenon of the battery cells, and improve the use performance and service life of the battery.

In some embodiments, along the first direction, both sides of the battery pack are provided with the first thermal management component, and each first thermal management component is provided with the thermal insulating member on the side facing away from the battery pack.

In the above technical solution, the battery pack is equipped with first thermal management components on both sides in the first direction, and each first thermal management component is correspondingly equipped with a thermal insulating member, which can further improve the thermal management ability of the first thermal management component on the battery cells of the battery pack, reduce the energy loss of the first thermal management components located on both sides of the battery pack, and further enhance the use performance and service life of the battery.

In some embodiments, the first thermal management component has a first surface facing away from the battery pack along the first direction; and the thermal insulating member is connected to the first surface and covers at least a portion of the first surface.

In the above technical solution, by connecting the thermal insulating member to the first surface of the first thermal management component and covering at least a part of the first surface, it is convenient to assemble the thermal insulating member on the one hand, which is conducive to reducing assembly difficulty. On the other hand, it can improve the thermal insulation effect of the thermal insulating member on the first thermal management component, thereby reducing energy loss of the first thermal management component.

In some embodiments, the thermal insulating member is a thermal insulating pad, and a thermal conductivity coefficient of a material of the thermal insulating member is k, satisfying a condition of k ≤ 0.5W/(mK).

In the above technical solution, the thermal insulating member is a thermal insulating pad made of a material with a thermal conductivity coefficient less than or equal to 0.5W/(mK), which provides good thermal insulation effect on the first thermal management component. The thermal insulating member in this structure is conducive to reducing the assembly difficulty between the thermal insulating member and the first thermal management component, as well as reducing the manufacturing cost of the thermal insulating member.

In some embodiments, the thermal insulating member has a second surface facing away from the first thermal management component along the first direction, and multiple grooves are provided on the second surface.

In the above technical solution, multiple grooves are provided on the second surface of the thermal insulating member facing away from the first thermal management component to reduce the contact area between the second surface and other components, and to separate the thermal insulating member from other components through the grooves, thereby further improving the thermal insulation effect of the thermal insulating member on the first thermal management component.

In some embodiments, the grooves penetrate both ends of the thermal insulating member along a second direction, wherein the second direction is perpendicular to the first direction.

In the above technical solution, by setting the groove as a structure extending along a second direction perpendicular to the first direction, and the groove passing through both ends of the thermal insulating member along the second direction, it is easy to process and manufacture the groove, which is conducive to reducing the difficulty of processing the thermal insulating member.

In some embodiments, a thickness of the thermal insulating member along the first direction is D₁, satisfying a condition of 0.1mm ≤ D₁ ≤ 5mm.

In the above technical solution, by setting the thickness of the thermal insulating member in the first direction to 0.1mm to 5mm, on the one hand, it can avoid the phenomenon of poor thermal insulation effect of the thermal insulating member caused by the thickness of the thermal insulating member being too small, and on the other hand, it can avoid the phenomenon of the thermal insulating member occupying too much internal space of the battery due to the thickness of the thermal insulating member being too large, thereby effectively reducing the volume of the battery and improving the energy density of the battery.

In some embodiments, a thermal insulating chamber is formed inside the thermal insulating member.

In the above technical solution, a thermal insulating chamber is arranged inside the thermal insulating member to achieve thermal insulation effect through the air contained in the thermal insulating chamber. The structure is simple and easy to manufacture.

In some embodiments, the wall thickness of the thermal insulating chamber along the first direction is D₂, satisfying a condition of 0.1mm ≤ D₂ ≤ 3mm.

In the above technical solution, by setting the thickness of the wall of the thermal insulating chamber in the first direction to 0.1mm to 3mm, on the one hand, it can avoid the phenomenon of weak structural strength of the thermal insulating member caused by the thickness of the wall of the thermal insulating chamber being too small to effectively support the structural form of the thermal insulating chamber, and on the other hand, it can avoid the phenomenon of excessive space occupied by the thermal insulating member caused by the thickness of the wall of the thermal insulating chamber being too large, so as to optimize the internal space of the battery.

In some embodiments, the thermal insulating member has a reinforcing part, wherein the reinforcing part is located within the thermal insulating chamber; and along the first direction, the reinforcing part is connected to two chamber wall surfaces of the thermal insulating chamber that are facing each other.

In the above technical solution, a reinforcing part is also provided inside the thermal insulating chamber of the thermal insulating member, and the reinforcing part is connected to the two chamber wall surfaces of the thermal insulating chamber that are facing each other in the first direction, so as to support the two chamber wall surfaces of the thermal insulating chamber that are facing each other in the first direction through the reinforcing part, thereby enhancing the overall structural strength of the thermal insulating member and ensuring the structural form of the thermal insulating chamber.

In some embodiments, the thermal insulating member is integrally formed with the first thermal management component.

In the above technical solution, by integrally forming the thermal insulating member with the thermal insulating chamber formed inside and the first thermal management component, on the one hand, the stability and reliability of the connection between the thermal insulating member and the first thermal management component can be effectively improved to ensure the thermal insulation effect of the thermal insulating member on the first thermal management component. On the other hand, the assembly process of the thermal insulating member and the first thermal management component can be optimized during the battery assembly process to optimize the production cycle of the battery, which is conducive to improving the production efficiency of the battery.

In some embodiments, along the first direction, an accommodating groove is provided on one side of the first thermal management component facing away from the battery pack, and the accommodating groove is configured to accommodate at least a portion of the thermal insulating member.

In the above technical solution, by setting the accommodating groove on the side of the first thermal management component facing away from the battery pack in the first direction, the thermal insulating member can be accommodated in the accommodating groove. On the one hand, it can play a certain limiting and positioning role for the thermal insulating member, which is conducive to reducing the assembly difficulty between the thermal insulating member and the first thermal management component and improving the production efficiency of the battery. On the other hand, setting the thermal insulating member in the accommodating groove can provide certain protection for the thermal insulating member to avoid the phenomenon of wear or damage to the thermal insulating member during use, thereby improving the service life of the thermal insulating member.

In some embodiments, multiple battery cells are arranged along the first direction; and the battery pack further comprises a second thermal management component, wherein one second thermal management component is arranged between every two adjacent battery cells along the first direction, and the second thermal management component is configured to manage a temperature of the battery cells.

In the above technical solution, multiple battery cells are arranged along the first direction, and a second thermal management component is also provided between every two adjacent battery cells to manage the temperature of multiple battery cells in the battery pack through the cooperation of the first thermal management component and the second thermal management components, which is conducive to alleviating the temperature rise of the battery during use. In addition, due to the thermal insulating member provided on one side of the first thermal management component facing away from multiple battery cells of the battery pack in the first direction, the phenomenon of heat exchange between the first thermal management component and other components can be reduced. This ensures that the temperature management effects of the first thermal management component and second thermal management component on the battery cells are the same, thereby reducing the temperature difference between multiple battery cells in the battery pack. This is beneficial for ensuring temperature to be even in various areas inside the battery, thereby effectively improving the use performance and service life of the battery.

In some embodiments, a thickness of the second thermal management component in the first direction is greater than a thickness of the first thermal management component in the first direction.

In the above technical solution, by setting the thickness of the second thermal management component to be greater than that of the first thermal management component, the heat transfer capacity of the second thermal management component is greater than that of the first thermal management component. Since the second thermal management component located between two adjacent battery cells in the first direction needs to exchange heat with the battery cells on both sides, while the first thermal management component only needs to exchange heat with the battery cell on one side, batteries with this structure can meet the heat transfer needs of battery cells in different regions, thereby improving the temperature uniformity in various areas inside the battery.

In some embodiments, the battery comprises multiple battery packs, and each of the battery packs is equipped with the first thermal management component and the thermal insulating member.

In the above technical solution, the battery is provided with multiple battery packs, and each of the battery packs is equipped with the first thermal management component and the thermal insulating member, which can effectively ensure the temperature management function inside the battery while improving the energy storage capacity of the battery, thereby facilitating the improvement of the use performance and service life of the battery.

In some embodiments, the multiple battery packs are arranged at intervals along the first direction.

In the above technical solution, by arranging multiple battery packs at intervals along the first direction to facilitate assembly of multiple battery packs, it is beneficial to reduce the assembly difficulty of battery.

In the second aspect, the embodiment of the present application also provides an electrical equipment, comprising the above battery for providing electrical energy.

### Brief Description of Drawings

In order to more clearly illustrate technical solutions of embodiments of the present application, drawings required for use in the embodiments will be described briefly below. It should be understood that the following drawings are merely illustrative of some embodiments of the present application, which therefore should not be understood as a limitation to the scope. For those of ordinary skill in the art, other related drawings can also be obtained according to these drawings without any inventive effort.
FIG. 1 is a schematic view of the structure of the vehicle provided in some embodiments of the present application;
FIG. 2 is a structure schematic diagram of the battery provided in some embodiments of the present application;
FIG. 3 is a schematic view of partial structure of the battery provided in some embodiments of the present application;
FIG. 4 is a partial enlarged view of the A position of the battery shown in FIG. 3;
FIG. 5 is a connection schematic view of the thermal insulating member and the first thermal management component provided in some embodiments of the present application;
FIG. 6 is a sectional view of the thermal insulating member connected to the first thermal management component provided in some embodiments of the present application;
FIG. 7 is a sectional view of the thermal insulating member provided in some embodiments of the present application;
FIG. 8 is a connection schematic view of the thermal insulating member and the first thermal management component provided in some other embodiments of the present application;
FIG. 9 is a sectional view of the thermal insulating member connected to the first thermal management component provided in some other embodiments of the present application;
FIG. 10 is a sectional view of the thermal insulating member provided in some other embodiments of the present application;
FIG. 11 is a sectional view of the thermal insulating member connected to the first thermal management component provided in some other embodiments of the present application;
FIG. 12 is a sectional view of the thermal insulating member provided in some other embodiments of the present application;
FIG. 13 is a sectional view of the thermal insulating member provided in some other embodiments of the present application; and
FIG. 14 is a sectional view of the thermal insulating member connected to the first thermal management component provided in some other embodiments of the present application.

Reference signs: 1000-vehicle; 100-battery; 10-battery pack; 11-battery cell; 12-second thermal management component; 20-first thermal management component; 21-first surface; 22-accommodating groove; 30-thermal insulating member; 31-second surface; 32-groove; 33-thermal insulating chamber; 34-reinforcing part; 40-box; 41-first box body; 42-second box body; 200-controller; 300-motor; X-first direction; Y-second direction.

### Detailed Description of Embodiments

In order to make the objectives, technical solutions and advantages of the embodiments of the present application clearer, the technical solutions in the embodiments of the present application will be described clearly below with reference to the drawings in the embodiments of the present application. Obviously, the embodiments described are some of, rather than all of, the embodiments of the present application. All the other embodiments obtained by those of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprise/include", "provide", and any variations thereof in the description and claims, as well as the brief description of the drawings described above of the present application are intended to cover non-exclusive inclusions. The terms "first", "second", etc. in the description and the claims of the present application or the drawings are used to distinguish different objects, rather than describing specific sequences or primary and secondary relationships.

In the present application, the phrase "embodiment" mentioned means that the specific features, structures, or characteristics described with reference to the embodiments may be encompassed in at least one embodiment of the present application. The phrase at various locations in the description does not necessarily refer to the same embodiment, or an independent or alternative embodiment exclusive of another embodiment.

In the description of the present application, it should be noted that unless otherwise explicitly specified and defined, the terms "install", "link", "connect" and "attach" should be understood in a broad sense, for example, it may be a fixed connection, a detachable connection, or an integrated connection; and may be a direct connection, an indirect connection by means of an intermediate medium, or internal communication between two elements. For those of ordinary skill in the art, the specific meaning of the foregoing terms in the present application may be understood according to specific circumstances.

The term "and/or" in the present application is only a description for the association relationship of the associated object, indicating that there can be three types of relationships. For example, A and/or B can indicate three conditions: the presence of only A, the presence of both A and B, and the presence of only B. In addition, the character "/" in the present application generally indicates that the associated objects before and after have an "or" relationship.

In the embodiments of the present application, the same reference signs represent the same components, and for simplicity, detailed descriptions for the same components are omitted in different embodiments. It should be understood that the thickness, length, width, and other dimensions of various components in the embodiments of the present application shown in the drawings, as well as the overall thickness, length, width, and other dimensions of the integrated device, are only illustrative examples and should not constitute any limitations to the present application.

The term "multiple (a plurality of)" in the present application refers to two or more (including two).

In the present application, the battery cell can include a lithium ion secondary battery, a lithium ion primary battery, a lithium sulfur battery, a sodium lithium ion battery, a sodium ion battery or a magnesium ion battery, etc., which is not limited by the embodiments of the present application. The battery cell can be cylindrical, flat, or rectangular, or be of other shapes, which is also not limited by the embodiments of the present application. Battery cells are generally divided into three types according to the packaging method: cylindrical battery cell, square battery cell, and soft pack battery cell, which is also not limited by the embodiments of the present application.

The battery mentioned in the embodiments of the present application refers to a single physical module that includes one or more battery cells to provide higher voltage and capacity. For example, the batteries mentioned in the present application may include battery modules or battery packs, etc. The battery generally includes a box used to encapsulate one or more battery cells. The box can prevent liquids or other foreign objects from affecting the charging or discharging of battery cells.

The battery cell includes a shell, electrode assemblies, and electrolyte, and the shell accommodates the electrode assemblies and electrolyte. The electrode assembly is composed of a positive electrode plate, a negative electrode plate, and a separator. Battery cells mainly rely on metal ions moving between the positive and negative electrode plates to operate.

In recent years, new energy vehicles have made significant progress. In the field of electric vehicles, power batteries play an irreplaceable and important role as the power source of electric vehicles. The battery consists of a box and multiple battery cells housed within the box. The batteries, as the core components of new energy vehicles, have high requirements in terms of use performance and cycle life.

The inventor found that in general power batteries, in order to obtain sufficient power and optimize the internal space of the battery, multiple battery cells inside the battery box are usually arranged in a stacking manner to form a battery pack. However, during use, the battery cells of the battery having such structure generate a large amount of heat during the use process of continuous charging and discharging, which can cause a rise in the internal temperature of the battery, and the structure of stacking multiple battery cells will exacerbate the occurrence of this phenomenon, thereby seriously affecting use performance and service life of the battery, and even leading to significant safety hazards during its use, which is not conducive to consumer safety. Therefore, in prior art, multiple cooling plates are usually installed inside the battery box, and arranged at intervals, and the battery cell is placed between two adjacent cooling plates to regulate temperature of the battery cell. However, in the battery having such structure, the outermost cooling plate among multiple cooling plates will exchange heat with the battery box or other components, which will reduce the temperature regulation effect of the cooling plate on the battery cells, resulting in poor thermal management ability of the water-cooled plate on the battery cells. This can easily lead to temperature rise inside the battery, resulting in poor overall use performance of the battery and not conducive to improving the service life of the battery.

Based on the above considerations, in order to solve the problem of poor use performance and short service life of existing batteries, the inventor has conducted in-depth research and designed a battery, which includes a battery pack, a first thermal management component, and a thermal insulating member. The battery pack comprises multiple battery cells; along a first direction, the first thermal management component is arranged on one side of the battery pack, and the first thermal management component is configured to manage a temperature of the battery pack. Along the first direction, the thermal insulating member is positioned on the side of the first thermal management component facing away from the battery pack.

In this structure of the battery, a first thermal management component is provided on one side of the battery pack in the first direction to manage the temperature of the battery cells of the battery pack through the first thermal management component. A thermal insulating member is provided on the first thermal management component, and the thermal insulating member is located on the side of the first thermal management component facing away from the battery pack in the first direction, so as to reduce the phenomenon of heat exchange between the first thermal management component and other components or the outside world, thereby reducing the energy loss of the first thermal management component and ensuring the thermal management ability of the first thermal management component on the battery cells. This can effectively regulate the temperature of the battery cells, reduce the temperature rise phenomenon of the battery cells, and improve the use performance and service life of the battery.

The battery disclosed in the embodiments of the present application can be used in, but is not limited to, electrical equipment such as vehicles, ships, or aircraft. The power system of the electrical equipment can be composed of batteries disclosed in the present application, which is beneficial for reducing the temperature rise phenomenon inside the battery and improving its use performance and service life.

The embodiment of the present application provides an electrical equipment using a battery as a power source, which can be but is not limited to mobile phones, tablet computers, laptops, electric toys, electric tools, electromobile, electric vehicles, ships, spacecraft, and so on. In the above, electric toys can include fixed or mobile electric toys, such as game consoles, electric car toys, electric ship toys and electric aircraft toys, and spacecraft can include aircraft, rockets, space shuttles and spaceships, etc.

For the convenience of explanation, the following embodiment takes an electrical device in one embodiment of the present application being the vehicle 1000 as an example to explain.

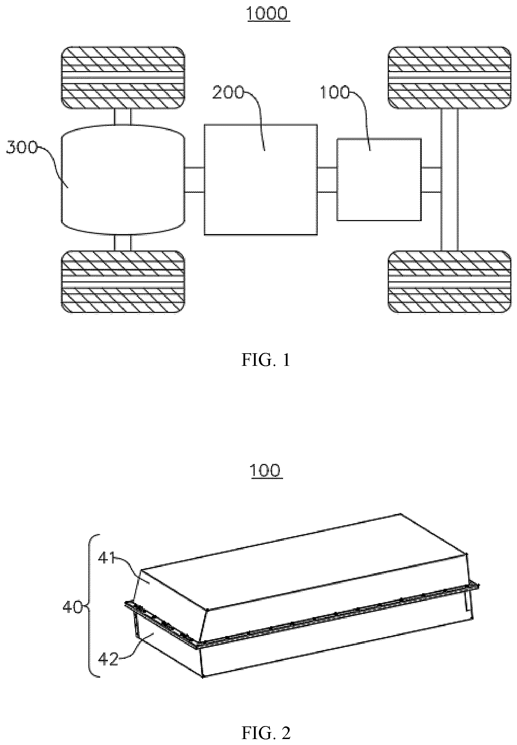

Referring to FIG. 1, FIG. 1 is a structural schematic view of the vehicle 1000 provided in some embodiments of the present application. The vehicle 1000 can be a fuel powered vehicle, a gas powered vehicle, or a new energy vehicle. The new energy vehicle can be a pure electric vehicle, a hybrid electric vehicle, or an extended range vehicle, etc. The interior of vehicle 1000 is equipped with battery 100, which can be installed at the bottom, head, or tail of vehicle 1000. Battery 100 can be used for the power supply for the vehicle 1000. For example, battery 100 can serve as the operating power supply for vehicle 1000. The vehicle 1000 can also include a controller 200 and a motor 300, wherein the controller 200 is used to control the battery 100 to supply power to the motor 300, for example, used for the working power demand during startup, navigation, and running of the vehicle 1000.

In some embodiments of the present application, the battery 100 can not only serve as the operating power source for vehicle 1000, but also as the driving power source for vehicle 1000, thereby replacing or partially replacing fuel or natural gas to provide driving power for vehicle 1000.

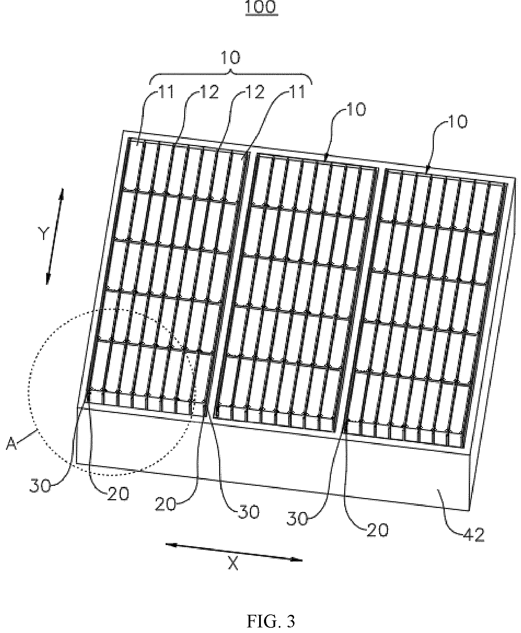

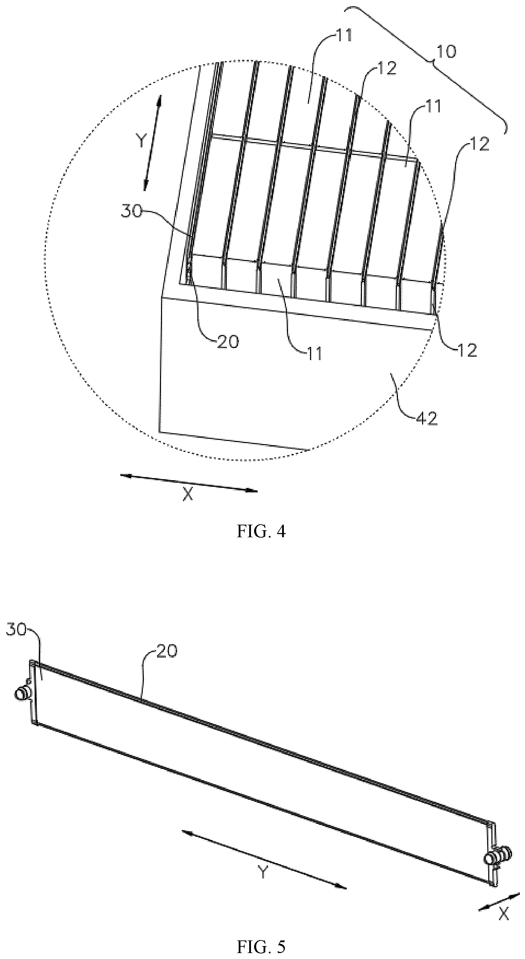

According to some embodiments of the present application, referring to FIGS. 2 to 5, FIG. 2 is a structure schematic diagram of the battery 100 provided in some embodiments of the present application; FIG. 3 is a schematic view of partial structure of the battery 100 provided in some embodiments of the present application; FIG. 4 is a partial enlarged view of the A position of the battery 100 shown in FIG. 3; and FIG. 5 is a connection schematic view of the thermal insulating member 30 and the first thermal management component 20 provided in some embodiments of the present application The present application provides a battery 100, which includes a battery pack 10, a first thermal management component 20, and a thermal insulating member 30. The battery pack 10 includes multiple battery cells 11. Along a first direction X, the first thermal management component 20 is arranged on one side of the battery pack 10, and the first thermal management component 20 is configured to manage a temperature of the battery pack 10. Along the first direction X, the thermal insulating member 30 is positioned on the side of the first thermal management component 20 facing away from the battery pack 10.

Optionally, battery 100 may also include a box 40, which is used to provide assembly space for components such as battery pack 10, thermal management components, and thermal insulating member 30. That is, battery pack 10, thermal management components, and thermal insulating member 30 are all accommodated within box 40.

The structure of the box 40 can be various. In some embodiments, as shown in FIGS. 2 and 3, the box 40 may include a first box body 41 and a second box body 42. The first box body 41 and the second box body 42 are mutually covered, and the first box body 41 and the second box body 42 jointly define an assembly space for accommodating the battery pack 10. The second box body 42 can be in a hollow structure with an opening at one end, the first box body 41 can be in a plate-shaped structure, and the first box body 41 is covered on the opening side of the second box body 42 to jointly define the assembly space by the first box body 41 and the second box body 42. Of course, in other embodiments, the first box body 41 and the second box body 42 can also both be in hollow structure with an opening on one side, and the opening side of the first box body 41 is covered on the opening side of the second box body 42. The box 40 formed by the first box body 41 and the second box body 42 can be of various shapes, such as cylinder, cuboid, etc. As an example, in FIG. 2, the box 40 is in a cuboid structure.

In battery 100, one or multiple battery packs 10 can be provided in the box 40. As an example, in FIG. 3, the battery 100 includes three battery packs 10, which are arranged at intervals along the first direction X inside the box 40. Of course, in other embodiments, the battery packs 10 set inside the box 40 can also be provided in the number of two, four, or five, etc.

Battery pack 10 includes multiple battery cells 11, and each battery cell 11 can be a secondary battery or a primary battery; and can also be a lithium sulfur battery, sodium ion battery, or magnesium ion battery, but is not limited thereto. The battery cell 11 can be cylindrical, flat, or rectangular, or be of other shapes. As an example, in FIG. 3, the battery cell 11 is in a shape of cuboid.

Multiple battery cells 11 can be connected in series, parallel, or hybrid. Hybrid connection refers to both series and parallel connections existing among multiple battery cells 11. Multiple battery cells 11 can be directly connected in series, parallel, or hybrid together, and then the battery pack 10 composed of multiple battery cells 11 is accommodated in the box 40. The battery pack 10 may also include other structures, for example, the battery pack 10 may also include a busbar component for achieving electrical connection between multiple battery cells 11.

The first thermal management component 20 plays a role in exchanging heat with the battery cell 11 to manage the temperature of the battery cell 11. For example, the first thermal management component 20 can be a harmonica-shaped tube or the like, and temperature regulation for the battery cell 11 can be achieved through the heat exchange medium contained within the first thermal management component 20. The specific structure of the first thermal management component 20 can be found in relevant technologies and will not be repeated here.

Along the first direction X, the first thermal management component 20 is positioned on one side of the battery pack 10, that is, the first thermal management component 20 is located on one side of the battery pack 10 in the first direction X. It should be noted that the first thermal management component 20 is set correspondingly to the battery pack 10. If there are multiple battery packs 10, each battery pack 10 is equipped with the first thermal management component 20, and the first thermal management component 20 is set on one side of the corresponding battery pack 10 in the first direction X.

Along the first direction X, the thermal insulating member 30 is positioned on the side of the first thermal management component 20 facing away from the battery pack 10, that is, the thermal insulating member 30 is positioned on the side of the first thermal management component 20 facing away from the battery pack 10 in the first direction X. That is to say, in the first direction X, the first thermal management component 20 is located between the battery pack 10 and the thermal insulating member 30. It should be noted that the thermal insulating member 30 is correspondingly arranged with the first thermal management component 20. If there are multiple battery packs 10, each thermal insulating member 30 is arranged on the side of the corresponding first thermal management component 20 that faces away from the corresponding battery pack 10 in the first direction X.

The thermal insulating member 30 is used to separate the first thermal management component 20 from the box 40 or other components of the battery 100, so as to provide thermal insulation and reduce heat exchange between the first thermal management component 20 and the box 40 or other components of the battery 100. Optionally, the structure of thermal insulating member 30 can be various. For example, thermal insulating member 30 can be a thermal insulating pad made of thermal insulation material, or a hollow structure with a cavity formed inside to provide thermal insulation through the cavity. When thermal insulating member 30 is a hollow structure, it can be made of metal or non-metal thermal insulation material.

In some embodiments, multiple battery cells 11 of the battery pack 10 are arranged within the box 40. For example, in FIGS. 3 and 4, the battery pack 10 includes multiple rows of battery cells 11 arranged along the thickness direction of the battery cells 11, and each row of battery cells 11 includes multiple battery cells 11 arranged along the length direction of the battery cells 11.

In FIGS. 3 and 4, the first direction X is the thickness direction of the battery cells 11, that is, the battery pack 10 includes multiple rows of battery cells 11 arranged along the first direction X. That is to say, the thickness direction of the first thermal management component 20 is the same as that of the battery cells 11. It should be noted that in some embodiments, the first direction X can also be the length direction of the battery cell 11 or the height direction of the battery cell 11, that is, the first thermal management component 20 can also be set on one side of multiple battery cells 11 in the length direction of the battery cell 11, that is to say, the thickness direction of the first thermal management component 20 is the same as the length direction of the battery cell 11, or it can be set on one side of multiple battery cells 11 in the height direction of the battery cell 11, that is to say, the thickness direction of the first thermal management component 20 is perpendicular to the thickness direction of the battery cell 11, and the first thermal management component 20 covers the top or bottom of multiple battery cells 11.

For example, the battery pack 10 includes multiple rows of battery cells 11 arranged along the first direction X, and each row of battery cells 11 includes multiple battery cells 11 arranged along the second direction Y. The first thermal management component 20 is disposed on one side of the multiple battery cells 11 in the first direction X, and the first direction X and the second direction Y are perpendicular to each other. It should be noted that in other embodiments, the battery pack 10 may also only include multiple battery cells 11 arranged along the first direction X, that is, the battery pack 10 only includes one column of multiple battery cells 11 arranged along the first direction X.

The first thermal management component 20 is provided on one side of the battery pack 10 in the first direction X to manage the temperature of the battery cells 11 of the battery pack 10 through the first thermal management component 20. A thermal insulating member 30 is provided on the first thermal management component 20, and the thermal insulating member 30 is located on the side of the first thermal management component 20 facing away from the battery pack 10 in the first direction X, so as to reduce the phenomenon of heat exchange between the first thermal management component 20 and other components or the outside world, thereby reducing the energy loss of the first thermal management component 20 and ensuring the thermal management ability of the first thermal management component 20 on the battery cells 11. This can effectively regulate the temperature of the battery cells 11, reduce the temperature rise phenomenon of the battery cells 11, and improve the use performance and service life of the battery 100.

According to some embodiments of the present application, as shown in FIG. 3, along the first direction X, both sides of the battery pack 10 are provided with the first thermal management component 20, and each first thermal management component 20 is provided with the thermal insulating member 30 on the side facing away from the battery pack 10.

Along the first direction X, both sides of the battery pack 10 are equipped with first thermal management components 20, that is, each battery pack 10 is correspondingly equipped with first thermal management components 20 on both sides of the first direction X, so that the battery pack 10 is located between the corresponding two first thermal management components 20 in the first direction X.

Each first thermal management component 20 is provided with a thermal insulating member 30 on the side facing away from the battery pack 10, that is, each first thermal management component 20 is correspondingly provided with one thermal insulating member 30, and the thermal insulating member 30 is provided on the side of the corresponding first thermal management component 20 facing away from the corresponding battery pack 10 in the first direction X.

The battery pack 10 is equipped with first thermal management components 20 on both sides in the first direction X, and each first thermal management component 20 is correspondingly equipped with a thermal insulating member 30, which can further improve the thermal management ability of the first thermal management component 20 on the battery cells 11 of the battery pack 10, reduce the energy loss of the first thermal management components 20 located on both sides of the battery pack 10, and further enhance the use performance and service life of the battery 100.

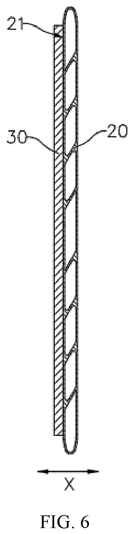

According to some embodiments of the present application, referring to FIG. 5, and further referring to FIG. 6, FIG. 6 is a sectional view of the thermal insulating member 30 connected to the first thermal management component 20 provided in some embodiments of the present application. The first thermal management component 20 has a first surface 21 facing away from the battery pack 10 along the first direction X; and the thermal insulating member 30 is connected to the first surface 21 and covers at least a portion of the first surface 21.

The thermal insulating member 30 is connected to the first surface 21 and covers at least a part of the first surface 21, that is, the thermal insulating member 30 can cover part of the first surface 21, or can completely cover the first surface 21.

For example, the thermal insulating member 30 can be connected to the first surface 21 in various ways, such as bonding, snapping, etc.

By connecting the thermal insulating member 30 to the first surface 21 of the first thermal management component 20 and covering at least a part of the first surface 21, it is convenient to assemble the thermal insulating member 30 on the one hand, which is conducive to reducing assembly difficulty. On the other hand, it can improve the thermal insulation effect of the thermal insulating member 30 on the first thermal management component 20, thereby reducing energy loss of the first thermal management component 20.

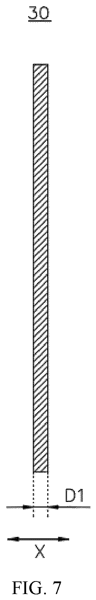

According to some embodiments of the present application, referring to FIGS. 5 and 6, and further referring to FIG. 7, FIG. 7 is a sectional view of the thermal insulating member 30 provided in some embodiments of the present application. The thermal insulating member 30 is a thermal insulating pad, and the thermal conductivity coefficient of the material of thermal insulating member 30 is k, which satisfies k ≤ 0.5W/(mK).

The thermal insulating member 30 is a gasket made of material with heat resistance and insulation effects. By placing the thermal insulating member 30 on the side of the first thermal management component 20 facing away from the battery pack 10, the thermal insulation effect of the thermal insulating member 30 on the first thermal management component 20 can be achieved.

For example, the material of the thermal insulating member 30 can be aerogel, rubber, polypropylene or polyamide.

In the embodiment where the thermal insulating member 30 is a thermal insulating pad, the thermal insulating member 30 can be connected to the first thermal management component 20 by bonding or snapping.

The thermal insulating member 30 is a thermal insulating pad made of a material with a thermal conductivity coefficient less than or equal to 0.5W/(mK), which provides good thermal insulation effect on the first thermal management component 20. The thermal insulating member 30 in this structure is conducive to reducing the assembly difficulty between the thermal insulating member 30 and the first thermal management component 20, as well as reducing the manufacturing cost of the thermal insulating member 30.

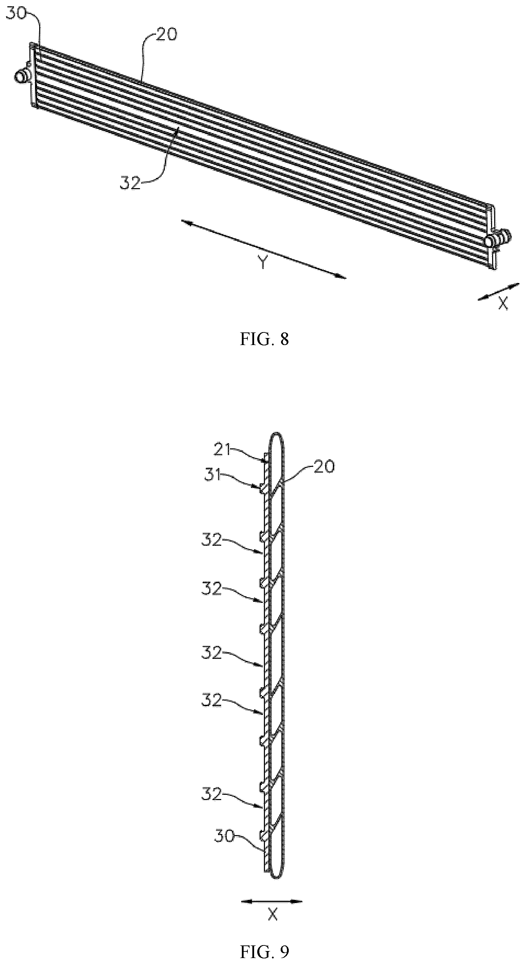

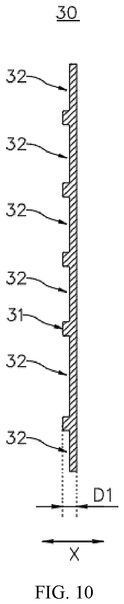

According to some embodiments of the present application, referring to FIGS. 8, 9 and 10, FIG. 8 is a connection schematic view of the thermal insulating member 30 and the first thermal management component 20 provided in some other embodiments of the present application; FIG. 9 is a sectional view of the thermal insulating member 30 connected to the first thermal management component 20 provided in some other embodiments of the present application; and FIG. 10 is a sectional view of the thermal insulating member 30 provided in some other embodiments of the present application. The thermal insulating member 30 has a second surface facing 31 away from the first thermal management component 20 along the first direction X, and multiple grooves 32 are provided on the second surface 31.

The thermal insulating member 30 has a second surface 31 facing away from the first thermal management component 20, that is, in the first direction X, the surface of the thermal insulating member 30 farthest from the first thermal management component 20 is the second surface 31.

Multiple grooves 32 are provided on the second surface 31, that is, multiple grooves 32 are formed on the second surface 31 that are recessed in the direction closer to the first thermal management component 20 in the first direction X.

Optionally, the shape of the groove 32 provided on the second surface 31 can be various, such as strip-shaped, circular, or elliptical. For example, in FIGS. 8 and 9, the groove 32 provided on the second surface 31 is of a strip-shaped structure.

Multiple grooves 32 are provided on the second surface 31 of the thermal insulating member 30 facing away from the first thermal management component 20 to reduce the contact area between the second surface 31 and other components, and to separate the thermal insulating member 30 from other components through the grooves 32, thereby further improving the thermal insulation effect of the thermal insulating member 30 on the first thermal management component 20.

In some embodiments, referring to FIGS. 8, 9 and 10 continuously, the grooves 32 penetrate both ends of the thermal insulating member 30 along a second direction Y, wherein the second direction Y is perpendicular to the first direction X.

The groove 32 is a strip-shaped structure extending along the second direction Y, and passes through both ends of thermal insulating member 30 along the second direction Y.

The second direction Y is perpendicular to the first direction X. The second direction Y can be the length direction of the first thermal management component 20 or the width direction of the first thermal management component 20. For example, in FIG. 8, the second direction Y is the length direction of the first thermal management component 20, that is, the groove 32 passes through both ends of the thermal insulating member 30 along the length direction of the first thermal management component 20, and multiple grooves 32 are arranged at intervals along the width direction of the first thermal management component 20.

By setting the groove 32 as a structure extending along a second direction Y perpendicular to the first direction X, and the groove 32 passing through both ends of the thermal insulating member 30 along the second direction Y, it is easy to process and manufacture the groove 32, which is conducive to reducing the difficulty of processing the thermal insulating member 30.

According to some embodiments of the present application, as shown in FIGS. 7 and 10, a thickness of the thermal insulating member 30 along the first direction X is D₁, satisfying a condition of 0.1mm ≤ D₁ ≤ 5mm.

It should be noted that in the embodiment where grooves 32 are provided on the second surface 31 of the thermal insulating member 30, the thickness D₁ of the thermal insulating member 30 is the distance between the second surface 31 of the thermal insulating member 30 with grooves 32 and the surface of the thermal insulating member 30 connected to the first thermal management component 20 in the first direction X.

By setting the thickness of the thermal insulating member 30 in the first direction X to 0.1mm to 5mm, on the one hand, it can avoid the phenomenon of poor thermal insulation effect of the thermal insulating member 30 caused by the thickness of the thermal insulating member 30 being too small, and on the other hand, it can avoid the phenomenon of the thermal insulating member 30 occupying too much internal space of the battery 100 due to the thickness of the thermal insulating member 30 being too large, thereby effectively reducing the volume of the battery 100 and improving the energy density of the battery 100.

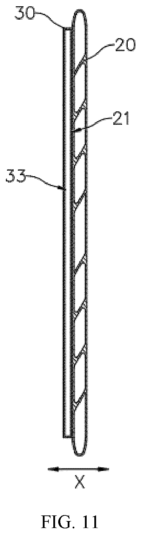

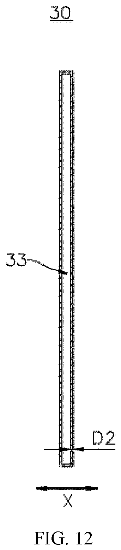

According to some embodiments of the present application, referring to FIGS. 11 and 12, FIG. 11 is a sectional view of the thermal insulating member 30 connected to the first thermal management component 20 provided in some other embodiments of the present application; and FIG. 12 is a sectional view of the thermal insulating member 30 provided in some other embodiments of the present application. A thermal insulating chamber 33 is formed inside the thermal insulating member 30.

The thermal insulating chamber 33 is formed inside the thermal insulating member 30, that is, the thermal insulating member 30 is in a hollow structure for thermal insulation through the thermal insulating chamber 33 inside the thermal insulating member 30. The thermal insulating member 30 achieves thermal insulation by air to achieve thermal insulation effect on the first thermal management component 20.

In the embodiment where the thermal insulating chamber 33 is formed inside the thermal insulating member 30, the material of the thermal insulating member 30 can be metal or non-metal, for example, the material of the thermal insulating member 30 can be metal materials such as aluminum and copper, or non-metal materials such as aerogel and rubber.

Of course, in this embodiment, the connection method between the thermal insulating member 30 and the first thermal management component 20 can be various. For example, the thermal insulating member 30 can be connected to the first thermal management component 20 through bonding or snapping, or can be formed as an integral structure with the first thermal management component 20, such as through stamping or extrusion molding processes. For example, in FIG. 11, the thermal insulating member 30 and the first thermal management component 20 are in a split structure, and the thermal insulating member 30 is bonded to the first thermal management component 20.

The thermal insulating chamber 33 is arranged inside the thermal insulating member 30 to achieve thermal insulation effect through the air contained in the thermal insulating chamber 33. The structure is simple and easy to manufacture.

In some embodiments, as shown in FIG. 12, the wall thickness of the thermal insulating chamber 33 along the first direction X is D₂, satisfying a condition of 0.1mm ≤ D₂ ≤ 3mm.

By setting the thickness of the wall of the thermal insulating chamber 33 in the first direction X to 0.1mm to 3mm, on the one hand, it can avoid the phenomenon of weak structural strength of the thermal insulating member 30 caused by the thickness of the wall of the thermal insulating chamber 33 being too small to effectively support the structural form of the thermal insulating chamber 33, and on the other hand, it can avoid the phenomenon of excessive space occupied by the thermal insulating member 30 caused by the thickness of the wall of the thermal insulating chamber 33 being too large, so as to optimize the internal space of the battery 100.

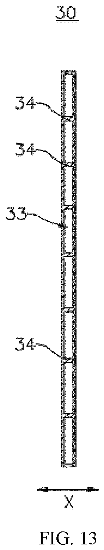

According to some embodiments of the present application, referring to FIG. 13, FIG. 13 is a sectional view of the thermal insulating member 30 provided in some other embodiments of the present application. The thermal insulating member 30 has a reinforcing part 34, wherein the reinforcing part 34 is located within the thermal insulating chamber 33; and along the first direction X, the reinforcing part 34 is connected to two chamber wall surfaces of the thermal insulating chamber 33 that are facing each other.

The thermal insulating member 30 has a reinforcing part 34, which is set inside the thermal insulating chamber 33. That is to say, in the embodiment where the thermal insulating chamber 33 is set inside the thermal insulating member 30, a reinforcing part 34 for supporting the chamber wall of the thermal insulating chamber 33 can also be set inside the thermal insulating chamber 33 of the thermal insulating member 30.

Along the first direction X, the reinforcing part 34 is connected to two chamber wall surfaces of the thermal insulating chamber 33 that are facing each other, that is, the reinforcing part 34 is set between two chamber wall surfaces of the thermal insulating chamber 33 that are facing each other in the first direction X, and the two ends of the reinforcing part 34 are respectively connected to the two chamber wall surfaces of the thermal insulating chamber 33 that are facing each other.

Optionally, the reinforcing part 34 provided in the thermal insulating chamber 33 can be one or multiple. For example, in FIG. 13, multiple reinforcing parts 34 are provided in the thermal insulating chamber 33, and the multiple reinforcing parts 34 are spaced apart in the thermal insulating chamber 33.

The reinforcing part 34 is also provided inside the thermal insulating chamber 33 of the thermal insulating member 30, and the reinforcing part 34 is connected to the two chamber wall surfaces of the thermal insulating chamber 33 that are facing each other in the first direction X, so as to support the two chamber wall surfaces of the thermal insulating chamber 33 that are facing each other in the first direction X through the reinforcing part 34, thereby enhancing the overall structural strength of the thermal insulating member 30 and ensuring the structural form of the thermal insulating chamber 33.

In some embodiments, the thermal insulating member 30 is integrally formed with the first thermal management component 20. That is to say, in the embodiment where the thermal insulating chamber 33 is formed inside the thermal insulating member 30, the thermal insulating member 30 may be an integrated structure with the first thermal management component 20, for example, made by stamping or extrusion molding processes, that is, the material of the thermal insulating member 30 is the same as that of the first thermal management component 20, and the thermal insulating member 30 plays a thermal insulation role through the thermal insulating chamber 33 formed inside to insulate the first thermal management component 20.

By integrally forming the thermal insulating member 30 with the thermal insulating chamber 33 formed inside and the first thermal management component 20, on the one hand, the stability and reliability of the connection between the thermal insulating member 30 and the first thermal management component 20 can be effectively improved to ensure the thermal insulation effect of the thermal insulating member 30 on the first thermal management component 20. On the other hand, the assembly process of the thermal insulating member 30 and the first thermal management component 20 can be optimized during the assembly process of the battery 100 to optimize the production cycle of the battery 100, which is conducive to improving the production efficiency of the battery 100.

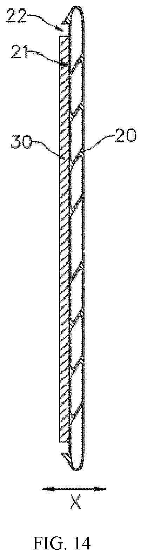

In accordance with some embodiments of the present application, referring to FIG. 14, FIG. 14 is a sectional view of the thermal insulating member 30 connected to the first thermal management component 20 provided in some other embodiments of the present application. Along the first direction X, an accommodating groove 22 is provided on one side of the first thermal management component 20 facing away from the battery pack 10, and the accommodating groove 22 is configured to accommodate at least a portion of the thermal insulating member 30.

The accommodating groove 22 is used to accommodate at least a part of the thermal insulating member 30, that is, the thermal insulating member 30 can be fully accommodated in the accommodating groove 22 or partially accommodated in the accommodating groove 22. That is to say, in the first direction X, the thermal insulating member 30 can extend beyond the accommodating groove 22 or not exceed the accommodating groove 22.

It should be noted that in the embodiment where the first thermal management component 20 has a first surface 21 and the thermal insulating member 30 covers the first surface 21, if the accommodating groove 22 is provided on the side of the first thermal management component 20 facing away from the battery pack 10, then the first surface 21 is the bottom surface of the accommodating groove 22, that is, the thermal insulating member 30 is connected to the bottom surface of the accommodating groove 22.

By setting the accommodating groove 22 on the side of the first thermal management component 20 facing away from the battery pack 10 in the first direction X, the thermal insulating member 30 can be accommodated in the accommodating groove 22. On the one hand, it can play a certain limiting and positioning role for the thermal insulating member 30, which is conducive to reducing the assembly difficulty between the thermal insulating member 30 and the first thermal management component 20 and improving the production efficiency of the battery 100. On the other hand, setting the thermal insulating member 30 in the accommodating groove 22 can provide certain protection for the thermal insulating member 30 to avoid the phenomenon of wear or damage to the thermal insulating member 30 during use, thereby improving the service life of the thermal insulating member 30.

According to some embodiments of the present application, as shown in FIGS. 3 and 4, multiple battery cells 11 are arranged along the first direction X; and the battery pack 10 may further comprise a second thermal management component 12, wherein one second thermal management component 12 is arranged between every two adjacent battery cells 11 along the first direction X, and the second thermal management component 12 is configured to manage a temperature of the battery cells 11.

The multiple battery cells 11 of the battery pack 10 are arranged inside the box 40. The battery pack 10 includes multiple rows of battery cells 11 arranged along the first direction X, and each row of battery cells 11 includes multiple battery cells 11 arranged along the second direction Y. Of course, in other embodiments, the battery pack 10 may also only include multiple battery cells 11 arranged along the first direction X, that is, the battery pack 10 only includes one column of multiple battery cells 11 arranged along the first direction X.

Along the first direction X, one second thermal management component 12 is installed between every two adjacent battery cells 11, and plays a role in heat exchange with the battery cell 11 to manage the temperature of the battery cell 11. For example, the second thermal management component 12 can be a harmonica-shaped tube or the like, and temperature regulation for the battery cell 11 can be achieved through the heat exchange medium contained within the second thermal management component 12. The specific structure of the second thermal management component 12 can be found in relevant technologies and will not be repeated here.

It should be noted that the second thermal management component 12 and the first thermal management component 20 can have the same structure or different structures.

Multiple battery cells 11 are arranged along the first direction X, and a second thermal management component 12 is also provided between every two adjacent battery cells 11 to manage the temperature of multiple battery cells 11 in the battery pack 10 through the cooperation of the first thermal management component 20 and the second thermal management components 12, which is conducive to alleviating the temperature rise of the battery 100 during use. In addition, due to the thermal insulating member 30 provided on one side of the first thermal management component 20 facing away from multiple battery cells 11 of the battery pack 10 in the first direction X, the phenomenon of heat exchange between the first thermal management component 20 and other components can be reduced. This ensures that the temperature management effects of the first thermal management component 20 and second thermal management component 12 on the battery cells 11 are the same, thereby reducing the temperature difference between multiple battery cells 11 in the battery pack 10. This is beneficial for ensuring temperature to be even in various areas inside the battery 100, thereby effectively improving the use performance and service life of the battery 100.

In some embodiments, a thickness of the second thermal management component 12 in the first direction X is greater than a thickness of the first thermal management component 20 in the first direction X.

The thickness of the second thermal management component 12 in the first direction X is greater than the thickness of the first thermal management component 20 in the first direction X, that is, the size of the second thermal management component 12 in the first direction X is greater than the size of the first thermal management component 20 in the first direction X, so that the space inside the second thermal management component 12 for accommodating the heat exchange medium can be larger than the space inside the first thermal management component 20 for accommodating the heat exchange medium, thereby achieving a heat transfer capacity of the second thermal management component 12 greater than that of the first thermal management component 20.

By setting the thickness of the second thermal management component 12 to be greater than that of the first thermal management component 20, the heat transfer capacity of the second thermal management component 12 is greater than that of the first thermal management component 20. Since the second thermal management component 12 located between two adjacent battery cells 11 in the first direction X needs to exchange heat with the battery cells 11 on both sides, while the first thermal management component 20 only needs to exchange heat with the battery cell 11 on one side, batteries 100 with this structure can meet the heat transfer needs of battery cells 11 in different regions, thereby improving the temperature uniformity in various areas inside the battery 100.

According to some embodiments of the present application, as shown in FIG. 3, the battery 100 comprises multiple battery packs 10, and each of the battery packs 10 is equipped with the first thermal management component 20 and the thermal insulating member 30.

Each battery pack 10 is equipped with a first thermal management component 20 and a thermal insulating member 30, that is, each battery pack 10 is equipped with a first thermal management component 20, and the first thermal management component 20 is set on one side of the corresponding battery pack 10 in the first direction X. At the same time, each thermal insulating member 30 is set on the side of the corresponding first thermal management component 20 that faces away from the corresponding battery pack 10 in the first direction X.

The battery 100 is provided with multiple battery packs 10, and each of the battery packs 10 is equipped with the first thermal management component 20 and the thermal insulating member 30, which can effectively ensure the temperature management function inside the battery 100 while improving the energy storage capacity of the battery 100, thereby facilitating the improvement of the use performance and service life of the battery 100.

In some embodiments, referring to FIG. 3 continuously, the multiple battery packs 10 are arranged at intervals along the first direction X. Of course, in other embodiments, the multiple battery packs 10 can also be arranged at intervals along the second direction Y.

By arranging multiple battery packs 10 at intervals along the first direction X to facilitate assembly of multiple battery packs 10, it is beneficial to reduce the assembly difficulty of battery 100.

According to some embodiments of the present application, the embodiments of the present application also provide an electrical equipment, including a battery 100 in any one of the above solutions, and the battery 100 is used to provide electrical energy to the electrical equipment.

The electrical equipment can be any of the aforementioned equipment or systems that use battery 100.

According to some embodiments of the present application, as shown in FIGS. 2 to 7, the present application provides a battery 100 comprising a battery pack 10, a first thermal management component 20, and a thermal insulating member 30. The battery pack 10 includes a second thermal management component 12 and multiple battery cells 11 arranged along the first direction X, and one second thermal management component 12 is provided between every adjacent two battery cells 11. The second thermal management component 12 is configured to manage the temperature of the battery cells 11. Along the first direction X, both sides of the battery pack 10 are equipped with first thermal management components 20, which have a first surface 21 facing away from the battery pack 10. The first thermal management components 20 are configured to manage the temperature of the battery pack 10. The thermal insulating member 30 is located on the side of the first thermal management component 20 facing away from the battery pack 10 in the first direction X. The thermal insulating member 30 is connected to the first surface 21 and covers at least a part of the first surface 21. The thermal insulating member 30 is a thermal insulating pad, and the material of the thermal insulating member 30 has a thermal conductivity coefficient of k, satisfying a condition of k ≤ 0.5W/(mK). A thickness of the thermal insulating member 30 along the first direction X is D₁, satisfying a condition of 0.1mm ≤ D₁ ≤ 5mm. There are multiple battery packs 10, which are arranged at intervals along the first direction X. Each battery pack 10 is equipped with first thermal management component 20 on both sides in the first direction X, and each first thermal management component 20 is equipped with thermal insulating member 30 on the side facing away from the corresponding battery pack 10 in the first direction X.

It should be noted that in the absence of conflicts, the embodiments and the features in the embodiments in the present application can be combined with each other.

The above is only preferred embodiments of the present application and is not intended to limit it. For those skilled in the art, the present application may undergo various modifications and variations. Any modifications, equivalent replacements, improvements, etc. made within the spirit and principles of the present application shall be included within the scope of protection of the present application.

## Claims

1. A battery, comprising:
a battery pack, comprising multiple battery cells;
a first thermal management component, wherein along a first direction, the first thermal management component is arranged on one side of the battery pack, and the first thermal management component is configured to manage a temperature of the battery pack; and
a thermal insulating member, wherein along the first direction, the thermal insulating member is positioned on one side of the first thermal management component facing away from the battery pack.

2. The battery according to claim 1, wherein along the first direction, both sides of the battery pack are provided with the first thermal management component, and each first thermal management component is provided with the thermal insulating member on a side facing away from the battery pack.

3. The battery according to claim 1 or 2, wherein the first thermal management component has a first surface facing away from the battery pack along the first direction; and
the thermal insulating member is connected to the first surface and covers at least a part of the first surface.

4. The battery according to any one of claims 1-3, wherein the thermal insulating member is an thermal insulating pad, and a material of the thermal insulating member has a thermal conductivity coefficient, k, which satisfies k ≤ 0.5W/(mK).

5. The battery according to claim 4, wherein the thermal insulating member has a second surface facing away from the first thermal management component along the first direction, and multiple grooves are provided on the second surface.

6. The battery according to claim 5, wherein along a second direction, the grooves penetrate through both ends of the thermal insulating member, the second direction being perpendicular to the first direction.

7. The battery according to any one of claims 4-6, wherein along the first direction, a thickness of the thermal insulating member is D₁, satisfying 0.1mm ≤ D₁ ≤ 5mm.

8. The battery according to any one of claims 1-3, wherein a thermal insulating chamber is formed inside the thermal insulating member.

9. The battery according to claim 8, wherein along the first direction, a wall thickness of the thermal insulating chamber is D₂, satisfying 0.1mm ≤ D₂ ≤ 3mm.

10. The battery according to claim 8 or 9, wherein the thermal insulating member has a reinforcing part, wherein the reinforcing part is located within the thermal insulating chamber; and along the first direction, the reinforcing part is connected to two chamber wall surfaces of the thermal insulating chamber that are facing each other.

11. The battery according to any one of claims 8-10, wherein the thermal insulating member and the first thermal management component are integrally formed.

12. The battery according to any one of claims 1-11, wherein along the first direction, an accommodating groove is provided on one side of the first thermal management component facing away from the battery pack, and the accommodating groove is configured to accommodate at least a part of the thermal insulating member.

13. The battery according to any one of claims 1-12, wherein the multiple battery cells are arranged along the first direction; and
the battery pack further comprises a second thermal management component, wherein one second thermal management component is arranged between every two adjacent battery cells along the first direction, and the second thermal management component is configured to manage a temperature of the battery cells.

14. The battery according to claim 13, wherein a thickness of the second thermal management component in the first direction is greater than a thickness of the first thermal management component in the first direction.

15. The battery according to any one of claims 1-14, wherein the battery comprises:
multiple battery packs, wherein each of the battery packs is equipped with a first thermal management component and a thermal insulating member.

16. The battery according to claim 15, wherein the multiple battery packs are arranged at intervals along the first direction.

17. Electrical equipment, comprising the battery according to any one of claims 1-16, wherein the battery is configured to provide electric energy.
